# EUROPÄISCHE PATENTANMELDUNG

(11) **EP 0 959 642 A2**
(43) Veröffentlichungstag der Anmeldung: **24.11.1999**
(21) Anmeldenummer: 99109935.9
(22) Anmeldetag: 20.05.1999
(51) Int. Cl.: H04Q 11/04

(54) **Netzabschlusseinrichtung mit Erdungsanschluss für digitale Kommunikationsnetze**

(30) Priorität: 20.05.1998 DE 19822760
(71) Anmelder: SIEMENS AKTIENGESELLSCHAFT, 80333 München (DE)
(72) Erfinder: Steinhäuser, Lothar Dr., 17491 Greifswald (DE); Boettcher, Henry, 17489 Greifswald (DE); Frauenstein, Rainer, 01917 Kamenz (DE)

(57) **Zusammenfassung**

In der Netzabschlußeinrichtung (NTBA) sind an den zweidrähtigen Anschluß im Sinne eines erdsymmetrischen Primärschutzes jeweils Überspannungs-Elemente (SE) angeschlossen und auf einen Erdungspunkt (EP) geschaltet. Die Netzabschlußeinrichtung (NTBA) weist einen mit dem Erdungspunkt (EP) verbundenen Erdungsanschluß (EA) auf, der mit einem lokalen Potentialausgleichssystem verbindbar ist. Durch die erfingungsgemäße Integration kann die gesamte für Querüberspannungen wirkende Schutzkette optimal abgestuft bzw. abgestimmt wirtschaftlich realisiert werden.

## Beschreibung

In digitalen Kommunikationsnetzen, insbesondere im ISDN-Kommunikationsnetz, realisieren Netzabschlußeinrichtungen einen Netzabschluß und stellen das Bindeglied zu an das Kommunikationsnetz anschließbaren Kommunikationsendgeräten dar. Die Netzabschlußeinrichtungen sind meist an mehrere Kilometer entfernte Netzverteileinrichtungen, wie Vermittlungseinrichtungen oder Multiplexer angeschlossen. Eine beispielsweise ISDN-Netzabschlußeinrichtung realisiert alle Funktionen einer ISDN-Benutzernetzschnittstelle und bietet einem Teilnehmer einen ISDN-Basisanschluß, an den ISDN-Kommunikationsendgeräte und/oder Anpassungseinrichtungen angeschlossen werden können. Netzseitig ist vorzugsweise eine nach dem Echokompensations-Übertragungsverfahren wirkende Leitungsschnittstelle realisiert, die direkt mit einer zweidrähtigen Anschlußleitung verbunden ist.

Die beiden Adern der Anschlußleitungen sind üblicherweise über mehrere Kilometer erdsymmetrisch und ungeschirmt von den Netzverteilereinrichtungen zu den Netzabschlußeinrichtungen geführt und in den jeweiligen Einrichtungen durch Übertrager abgeschlossen. Aufgrund der ungeschirmten und symmetrischen Führung der Anschlußleitungen können Fremdspannungen wie Stoßspannungen oder transiente Überspannungen eingekoppelt werden. Dies erfordert eine Schutzbeschaltung an Netzabschlußeinrichtungen, insbesondere auch gegen Sekundärwirkungen in stark blitzgefährdeten Gebieten.

Bisherige Schutzschaltungen sind zwischen den Adern der Anschlußleitungen angeordnet und bei Einsatzfällen mit besonderer Stoßspannungsbelastung von Netzabschlußeinrichtungen sind meist mehrstufige Schutzkonzepte erforderlich. Hierbei werden anschlußleitungsseitig in separat angeordneten Rahmen oder Gestellen Gas-Ableiter angeordnet und mit weiteren Schutzelementen wie Sicherungen zusammengeschaltet. Alternativ sind weitere Schutzelemente wie Sicherungen, Widerstände, Induktivitäten zu Primary Protection-Modulen zusammengefaßt und sind den Netzabschlußeinrichtungen in separaten Einrichtungen oder Modulen vorgeschaltet. Eine derartige Vorschaltung von Schutzelementen ist beispielsweise aus der Druckschrift 'Elekromagnetische Verträglichkeit',E.Habinger, Hüthig Verlag, 1992 bekannt. Dieses Schutzkonzept basiert auf der symmetrischen Ableitung von Überspannungen gegen eine Gebäude-Erdung, durch die eine Begrenzung der Quer- und Längs-Stoßspannungen erreicht werden soll. Aufgrund der separaten Anordnung der Überspannungsschutzanordnungen ist eine Abstimmung der Komponenten auf die Netzabschlußeinrichtungen schwierig und die Schutzwirkung ggf. stark herabgesetzt, wenn die Netzabschlußeinrichtung optimal auch separat betrieben werden soll. Andererseits kann sich insbesondere bei den erdfrei betriebenen bzw. 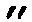 floatenden" Netzabschlußeinrichtungen eine überdimensionierte und damit unwirtschaftliche Längsspannungsfestigkeit bei einer separaten Anordnung der Schutzanordnung - insbesondere einer Primärschutzanordnung - ergeben.

Die der Erfindung zugrunde liegende Aufgabe ist darin zu sehen, eine kostengünstige, verbesserte Schutzschaltung gegen Überspannungen zu schaffen. Die Aufgabe wird ausgehend von einer Netzabschlußeinrichtung gemäß Oberbegriff des Patentanspruchs 1 durch dessen kennzeichnende Merkmale gelöst.

Der wesentliche Aspekt der Erfindung ist darin zu sehen, daß in die Netzabschlußeinrichtung an den zweidrähtigen Anschluß im Sinne eines erdsymmetrischen Primärschutzes jeweils Überspannungs-Elemente angeschlossen und auf einen Erdungspunkt geschaltet sind, und die Netzabschlußeinrichtung einen mit dem Erdungspunkt verbundenen Erdungsanschluß aufweist. Dieser ist im Einsatzbereich der Netzabschlußeinrichtung mit einem lokalen Potentialausgleichssystem (PAS) verbunden, falls erhöhter Schutzbedarf besteht - Anspruch 2. Durch die erfindungsgemäße Integration aller Schutzelemente einschließlich eines Erdungsanschlusses kann die gesamte für Querüberspannungen wirkende Schutzkette optimal abgestuft bzw. abgestimmt - Anspruch 3 - und wirtschaftlich realisiert werden, wobei die Bandpaßeigenschaften der in unmittelbarer Nähe vorhandenen Übertrager inklusive eines ggf. vorhandenen Sperr-Kondensators besonders vorteilhaft die schnellen Stoßüberspannungen abbauen. Die erfindungsgemäße Netzabschlußeinrichtung wird vorteilhaft als ISDN-Netzabschlußeinrichtung im ISDN-Kommunikationsnetz eingesetzt - Anspruch 4.

Im folgenden wird die erfindungsgemäße Netzabschlußeinrichtung anhand eines Blockschaltbildes näher erläutert.

Das Blockschaltbild zeigt eine Vermittlungseinrichtung - beispielsweise eine ISDN-Vermittlungseinrichtung KS, an die über eine zweidrähtige Anschlußleitung ASL eine Netzabschlußeinrichtung NTBA angeschlossen ist - stellvertretend für eine Vielzahl von anschließbaren Netzabschlußeinrichtungen ist eine Netzabschlußeinrichtung NTBA im Blockschaltbild dargestellt. In dieser ist im wesentlichen ein ISDN-Basisanschluß S0 mit zwei Nachrichtenkanälen mit je 64 kbit/s und ein Signalisierungskanal mit 16 kbit/s realisiert. An diesen Basisanschluß S0 sind Kommunikationsendgeräte KE anschließbar, die jeweils einen ISDN-Basisanschluß S0 aufweisen.

In der Netzabschlußeinrichtung NTBA ist jeweils eine Ader der zweidrähtigen Anschlußleitung ASL mit einer Wicklung w eines Übertragers U verbunden, wobei die anderen Enden der Wicklung w über einen Sperrkondensator S zusammengeschaltet sind. Des weiteren ist jeweils von den beiden Adern der Anschlußleitung ASL jeweils ein Schutzelement SE auf einen gemeinsamen Erdungspunkt EP geschaltet. Die Schutzelemente SE sind vorteilhaft in tripolare Überspannungs-Schaltkreise integriert, in denen beide Schutzelemente SE durch Halbleiter wie Zenerdioden oder Triacs einschließlich des Erdungspunktes EP realisiert sind - beispielsweise in 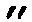 tripolar overvolting protection" - Schaltkreise der Fa. SGS-Thomson. Der Erdungspunkt EP ist innerhalb der Netzabschlußeinrichtung NTBA mit einem Erdungsanschluß EA verbunden. An eine Sekundärwicklung w' des Übertragers U sind über eine weitere Schutzbeschaltung SE' die integrierten Schaltkreise IS der Netzabschlußeinrichtung NTBA angeschlossen, in denen insbesondere die prozeduralen Eigenschaften der Netzabschlußeinrichtung NTBA realisiert sind. Die weiteren Schutzelemente SE' sind vorteilhaft durch bekannte Diodenschaltungen realisiert, die die Eingänge der integrierten Schaltung IS vor Überspannungen, die über deren Betriebsspannung liegen, schützen.

Der Erdungsanschluß EA wird, um insbesondere mit der der am Einsatzort der Netzabschlußeinrichtung NTBA vorhandenen Gebäudeerde, d.h. mit dem vorhandenen Potentialausgleichssystem PAS verbunden - im Blockschaltbild durch das Erdesymbol und die Bezeichnung PAS angedeutet.

Bei offenem oder fehlendem Erdanschluß EA wirkt die Schutzbeschaltung für den Netzabschluß in herkömmlicher Weise (floatender Betrieb).

Durch die Anordnung aller Schutzelemente SE,SE' in der Netzabschlußeinrichtung NTBA kann aufgrund der Nähe der Bauelemente untereinander und der lokalen Erdung der Schutzelemente SE,SE' eine präzisere Abstimmung der Schutzstufen hinsichtlich ihrer Wirkung gegen Quer- und Längsüberspannungen und damit eine gezieltere Schutzwirkung bewirkt werden.

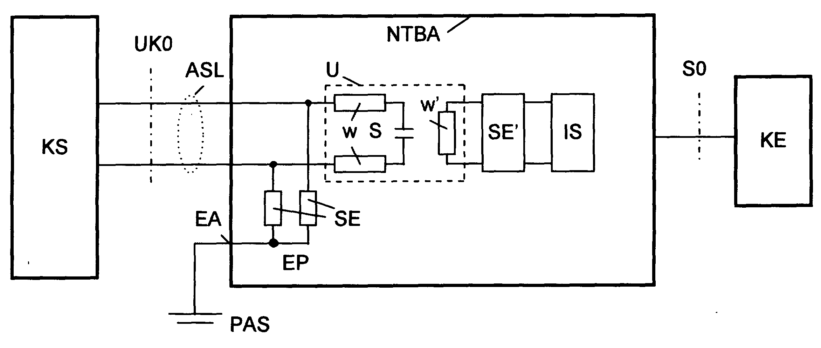

## Patentansprüche

1. Netzabschlußeinrichtung für den zweidrähtigen Anschluß an digitale Kommunikationsnetze,
**dadurch gekennzeichnet**,
daß in die Netzabschlußeinrichtung (NTBA) an den zweidrähtigen Anschluß im Sinne eines erdsymmetrischen Primärschutzes jeweils Überspannungs-Elemente (SE) angeschlossen und auf einen Erdungspunkt (EP) geschaltet sind, und daß die Netzabschlußeinrichtung (NTBA) einen mit dem Erdungspunkt (EP) verbundenen Erdungsanschluß (EA) aufweist.

2. Netzabschlußeinrichtung nach Anspruch 1,
**dadurch gekennzeichnet**,
daß im Einsatzbereich der Netzabschlußeinrichtung (NTBA) der Erdungsanschluß (EA) mit einem lokalen Potentialausgleichssystem (PAS) verbunden ist.

3. Netzabschlußeinrichtung nach Anspruch 1 oder 2,
**dadurch gekennzeichnet**,
daß die Überspannungselemente (SE) auf die Überspannungseigenschaften der Eingangsschaltung der Netzabschlußeinrichtung (NTBA) abgestimmt sind.

4. Netzabschlußeinrichtung nach einem der Ansprüche 1 bis 3,
**dadurch gekennzeichnet**,
daß die Netzabschlußeinrichtung (NTBA) für den ISDN-Basisanschluß (S0) an eine ISDN-Vermittungseinrichtung (KS) vorgesehen ist.
